# EUROPEAN PATENT APPLICATION

(11) **EP 3 900 523 A1**
(43) Date of publication of application: **27.10.2021**
(21) Application number: 19897562.5
(22) Date of filing: 10.12.2019
(51) Int. Cl.: A01G 22/30, A01G 24/44

(54) **PLANTING SHEET**

(30) Priority: 21.12.2018 JP 2018239983
(71) Applicant: Green's Green Co., Ltd., Niigata-shi, Niigata 956-0832 (JP)
(72) Inventor: SATO, Seiya, Niigata-shi, Niigata 956-0832 (JP)
(74) Representative: Grünecker Patent- und Rechtsanwälte PartG mbB
(86) International application number: PCT/JP2019/048334
(87) International publication number: WO 2020/129756

(57) **Abstract**

To provide a vegetation sheet which requires no soil as a base of cultivation of Sunagoke grown seedlings and enables the cultivation of Sunagoke grown seedlings in a stable state even in a severe environment such as on a steep slope or in a strong wind. A vegetation sheet 1-1 comprises a surface layer 10 in which Sunagoke grown seedlings 30 are laid and a core layer 20 which allows rhizoids 30a of the Sunagoke grown seedlings 30 extending with growth to enter downward therein. The core layer 20 has a rough netlike structure which has spaces having an aperture size equal to or larger than the thickness of each rhizoid 30a so as to allow the rhizoids 30a to enter therethrough.

## Description

### FIELD OF THE INVENTION

The present invention relates to a sheet for vegetation of Sunagoke moss (Racomitrium canescens), and more particularly to a vegetation sheet which enables the cultivation of Sunagoke moss in a stable condition, helps the maintenance of Sunagoke moss, and can be used even for transport directly.

### BACKGROUND

Solving the heat island problem in urban areas is one of the most important issues that should be solved immediately in terms of action for the global warming. Recently, greening using Sunagoke moss has attracted attention as a measure of solving the problem.

Since Sunagoke moss is tolerant of heat and drought and thus can be cultivated in a relatively stable condition even under severe environments, Sunagoke moss is thought of as a plant suitably used for greening in urban areas with heat island effect. Greening with Sunagoke moss not only provides richness and comfort to inhabitants but show promise for an effect of absorbing carbon dioxide, triggering violent weather, and heavy metals as atmospheric pollutants and also an effect of reducing energy consumption of air conditioners and the like because of its thermal insulating activity.

In the conventional greening business using Sunagoke moss, the cultivation and supply of Sunagoke moss depends on extraction of Sunagoke moss from mountains and forests under severe seasonal changes and long-term (normally 2- to 3-year) cultivation in an extensive field under the current conditions. Accordingly, there is a problem that it is difficult to ensure a steady supply and lower the price of Sunagoke moss and also a problem of dwindling natural resources. As a result, expansion of the greening business using Sunagoke moss faces difficult situation.

Since Sunagoke moss used for greening is cultivated on a base comprising a soil generally including sand and the like and plant fibers, it has to be maintained suitably (especially for keeping damp) by a technically sophisticated person. Therefore, unsuitable maintenance may be conducted by a consumer not a technically sophisticated person, causing a problem of deterioration in the beauty of Sunagoke moss used for greening. Because we are strictly prohibited by law to export Sunagoke moss with soil and the like to overseas, the product market using Sunagoke moss is limited substantially to only domestic trade. Further, the market has limited application such as for landscaping/bonsai in which cultivated Sunagoke moss is applied directly to soil so that there is a problem that it is difficult to develop a new market such as for small-scale exterior and interior market.

As one of techniques for solving the aforementioned problems, there is a vegetation sheet described in Patent document 1 for example. The vegetation sheet comprises a sheet layer made of non-woven fabric and a Sunagoke moss layer placed over the sheet layer. The Sunagoke moss layer is made by laying grown seedlings of Sunagoke moss. The non-woven fabric is made from polyester or polypropylene which has an affinity for rhizoids of Sunagoke moss and has the advantage of water absorbing ability, water retaining ability, water permeability, and durability. The vegetation sheet having such structure achieves stable growth of Sunagoke moss at low cost because fibers raised on a surface of the sheet layer and rhizoids of Sunagoke moss are entwined with each other and bind together. Further, the vegetation sheet allows to grow Sunagoke moss without using soil and the like as the base and thus also allows the export to overseas. Furthermore, since Sunagoke moss can be cultivated on a sheet of a predetermined size, it facilitates fixation to soil and the like and allows development of a new market such as for small-scale exterior and interior market.

### PRIOR ART DOCUMENTS

### PATENT DOCUMENTS

Patent document 1: JP6403078B

### SUMMARY OF THE INVENTION

### PROBLEM TO BE SOLVED BY THE INVENTION

Since the vegetation sheet described in Patent document 1 has only a structure in which fibers raised on the surface of the sheet layer and rhizoids of Sunagoke moss are entwined with each other and bind together, the binding force between the sheet layer and the rhizoids of Sunagoke moss is not always sufficient. Therefore, the vegetation sheet is suitably used for cultivation on a relatively flat area with hardly any strong wind or rain, but it has a problem that, in a severe environment such as on a steep slope or in a strong wind and rain, Sunagoke moss may peel away and slip out of the vegetation sheet so that stable cultivation of Sunagoke moss is difficult.

The present invention was made in the light of the above described problems. It is an object of the present invention to provide a vegetation sheet which achieves cultivation of Sunagoke moss in a stable condition even in a severe environment such as on a steep slope or in a strong wind or rain by increasing binding force of Sunagoke moss relative to the sheet.

### MEANS FOR SOLVING THE PROBLEMS

A vegetation sheet according to the present invention comprises a surface layer in which Sunagoke grown seedlings are laid and a core layer which allows rhizoids of the Sunagoke grown seedlings extending with growth to enter therein, and is characterized in that the core layer has a netlike structure having spaces of an aperture size equal to or larger than the thickness of each rhizoid to allow the rhizoids to enter therein.

In the vegetation sheet, the rhizoids of the Sunagoke grown seedlings laid in the surface layer grow while entering into the netlike structure (in particular, spaces forming the netlike structure) of the core layer, thereby achieving improved binding force of the Sunagoke grown seedlings to the vegetation sheet as compared to the case that rhizoids are only entwined with a surface layer. Since Sunagoke moss has a characteristic that branch portions of rhizoids grow upward toward the top (obliquely upward) and, by taking advantage of this characteristic, the branch portions of the rhizoids are inserted obliquely upward into the spaces of the core layer, thereby further improving the tensile strength of Sunagoke moss when pulled.

In the present invention, in addition to the above feature, the Sunagoke grown seedlings may be laid in the surface layer in an amount (density) of 150 through 180 g/m².

By limiting the amount (density) of the Sunagoke grown seedlings to be laid to the abovementioned range, adequate cultivation of Sunagoke grown seedlings is achieved and uniform and tight growth of the Sunagoke grown seedlings is also achieved, thus providing vegetation sheets having beautiful appearance.

In addition to the above features, the present invention is also characterized in that the spaces of the core layer communicate between the upper and lower surfaces so that the rhizoids entering the spaces project from the lower surface of the core layer.

According to this structure, the rhizoids of the Sunagoke grown seedlings are allowed to be turned to extend beneath a lower surface of the core layer, i.e. the lower surface of the vegetation sheet. Accordingly, the binding force of the Sunagoke grown seedlings relative to the vegetation sheet can be further improved.

In addition to the above features, the present invention is also characterized by further comprising: a retaining member disposed beneath the core layer, wherein ends of the rhizoids projecting from the lower surface of the core layer are held between the core layer and the retaining member.

According to the vegetation sheet having this structure, the binding force of the Sunagoke grown seedlings relative to the vegetation sheet can be further improved.

In addition to the above features, the present invention is further characterized in that the surface layer is composed of portions raised from the surface of fibers composing the core layer.

This structure facilitates entwining between the rhizoids of the Sunagoke grown seedlings and the fibers in the surface layer, thereby further improving the binding force of the Sunagoke grown seedlings relative to the vegetation sheet.

In addition to the above features, the present invention is further characterized in that the core layer is formed by non-woven fabric made of polyester or polypropylene fibers.

The non-woven fabric made of polyester or polypropylene fibers is excellent in affinity for rhizoids of Sunagoke moss, and also excellent in water absorbing ability, water retaining ability, water permeability, and durability, thereby enabling Sunagoke grown seedlings to be grown into a predetermined size in a short period.

### EFFECTS OF THE INVENTION

In the vegetation sheet according to the present invention, strong binding force of Sunagoke grown seedlings to the vegetation sheet is achieved by a structure that rhizoids of Sunagoke moss are allowed to enter the netlike structure forming the core layer of the vegetation sheet and by taking advantage of the characteristic that branch portions of the rhizoids tend to extend upward (obliquely upward). By using the vegetation sheet according to the present invention, it is possible to cultivate Sunagoke grown seedlings in a stable state even in a severe environment such as on a steep slope or in a strong wind or rain.

### BRIEF DESCRIPTION OF THE DRAWINGS

[Fig. 1] Fig. 1 is a sectional view of a vegetation sheet 1-1
[Fig. 2] Fig. 2 is a diagram showing one of grown seedlings 30 of Sunagoke moss.
[Fig. 3] Fig. 3 is a sectional view of a vegetation sheet 1-2.
[Fig. 4] Fig. 4 is a partially enlarged sectional view of the vegetation sheet 1-2.

### EMBODIMENTS OF CARRYING OUT THE INVENTION

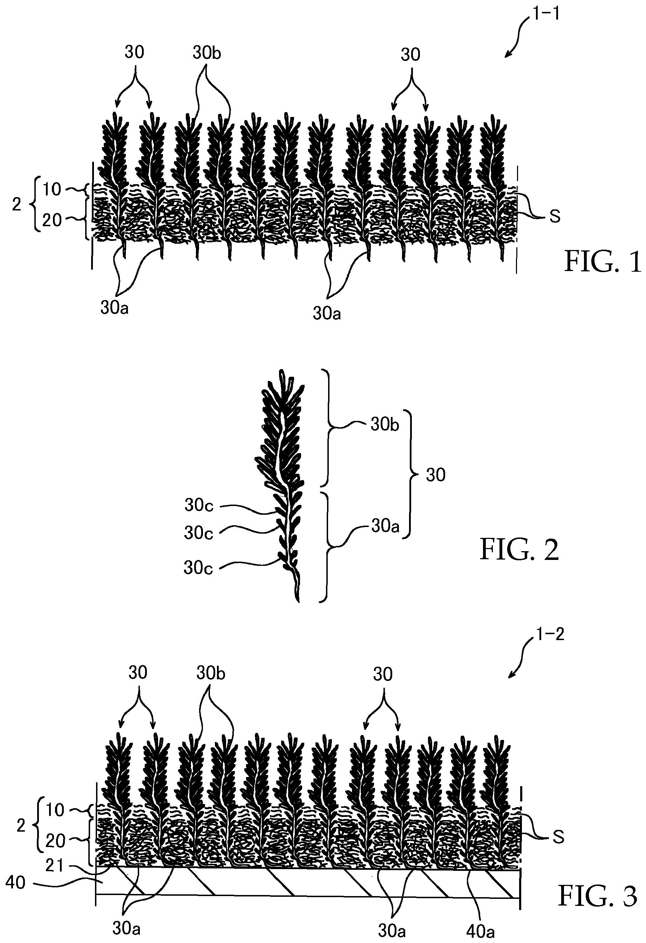

Embodiments according to the present invention will be described in detail with reference to the drawings.
First, description will be made with regard to a structure of a vegetation sheet 1-1 according to a first embodiment of the present invention with reference to Fig. 1 and Fig. 2.

As shown in Fig. 1, the vegetation sheet 1-1 comprises a main body 2 composed of a surface layer 10 and a core layer 20, and Sunagoke grown seedlings 30 laid in the surface layer 10.

The main body 2 is formed by, for example, non-woven loose fabric having a thickness of 2.0-3.0 mm. The non-woven fabric is made of fibers S of polyester or polypropylene and has a form of needle-punched carpet. The non-woven fabric has a density in the dried state is 30mg/cm² and a density in the wet state is 200-250mg/cm².

It should be noted that the fibers S for forming the non-woven fabric are not limited to fibers of polyester or polypropylene and may be fibers of various materials such as paper, cotton, wool, towel, palm fibers, and the like and made by various methods.

The surface of the non-woven fabric forming the main body 2 is preferably not coated with resin or the like in terms of affinity for rhizoids of Sunagoke moss, water absorbing ability, water retaining ability, water permeability, and durability. The color of the vegetation sheet is preferably black because it can diminish the rampancy of some another moss, that is inevitable during the cultivation, for aesthetic purposes and can accentuate the green of Sunagoke moss when absorbed water.

The surface layer 10 of the main body 2 is formed by raising the fibers S of the surface of the non-woven fabric, composing the main body 2, to a predetermined height (thickness). That is, the raised portion is the surface layer 10. Gametophores 30b in the seed moss in an initial stage of cultivation prior to generation of rhizoids 30a of the Sunagoke grown seedlings 30 as will be described later are caught by the raised fibers S, thereby preventing the seed moss of the Sunagoke grown seedlings 30 from turning/moving. Further, the rhizoids 30a rising by upgrowth of the Sunagoke grown seedlings 30 are entwined with the raised fibers S so that the surface layer 10 and the Sunagoke grown seedlings 30 bind together.

The core layer 20, along with the surface layer 10, composing the main body 2 is a rough netlike structure. The netlike structure is formed by snaggle of the fibers S of the non-woven fabric. Every space between fibers S has an aperture size, for example, equal to or larger than the thickness of each rhizoid 30a of the Sunagoke grown seedlings 30. Rhizoids 30a rise according to upgrowth of the Sunagoke grown seedlings 30 enter into these spaces so that the Sunagoke grown seedlings 30 are entwined with the core layer 20 and bind together.

As shown in Fig. 2, the rhizoid 30a has branch portions 30c growing to horizontally spread. Each branch portion 30c extends upward (obliquely upward) toward the top. Each branch portion 30c enters into the spaces of the core layer 20 obliquely upward toward the top and therefore functions like a wedge, thereby effectively preventing the Sunagoke grown seedling 30 from coming off the netlike structure of the core layer 20. Additionally, the inventor of the present invention focused attention on the characteristic of Sunagoke moss that the branch portions 30c of the rhizoids 30a grow obliquely upward toward the top and, by taking advantage of this characteristic, created the core layer 20 having such a netlike structure as to allow the branch portions 30c of the rhizoids 30a to extend obliquely upward.

The Sunagoke grown seedlings 30 laid in the surface layer 10 of the main body 2 are seed moss of Sunagoke or upgrowth thereof. Description will now be made as regard to characteristics and biology of Sunagoke moss. Sunagoke moss is a species of moss belonging to the genus Racomitrium in the family Grimmiaceae. It has resistance to drought so that it becomes in a state of apparent death when dried up and can remain viable for about 3 months without rain, and also has resistance to direct sunlight so that it can tolerate heat about 60°C when dried. Therefore, Sunagoke moss can be cultivated widely such as for a roof, a garden and the like and also is a small evergreen plant so that it never falls leaves and is enjoyable throughout the year, further it needs no soil for vegetation so that no waste and no soil will be thrown away, and thus it can be used as interior goods.

The Sunagoke moss (the Sunagoke grown seedling 30 in the present invention) is mainly composed of a gametophore portion (gametophore 30b) of performing photosynthesis and a protonema of rooting to soil. Upgrowth of the protonema for rooting to soil is especially called a rhizoid (the rhizoid 30a). The rhizoid 30a is naturally generated below the gametophore 30b after seeding and roots to the soil by climbing surfaces of soil grains to catch the soil grains. Though the rooting force of each rhizoid 30a is fragile, rhizoids grown from adjacent gametophores 30b of the seed moss cooperate to form a network, thereby functioning as a supporting member. From the surface (outer periphery) of the rhizoids 30a, as described above, the branch portions 30c grow obliquely upward toward the top.

The Sunagoke grown seedling 30 in this embodiment preferably has a dry weight (water-absorbing ratio of about 10%) of 150-180g per 1m². In case of particularly giving priority to the beauty or in case of obtaining a seed moss for new cultivation, it preferably has a dry weight of 180g per 1m².

Now, a cultivation method of Sunagoke moss (the Sunagoke grown seedling 30) using the vegetation sheet 1-1 according to this embodiment will be described.

First, the main body 2 is cut along a frame having a given shape and is fitted into the frame. On the main body 2 fitted in the frame, Sunagoke grown seedlings 30 of 1-2 cm in length are sown, for example, using screen. For this operation, you may control positions of the Sunagoke grown seedlings 30 using fingers in such a manner that the Sunagoke grown seedlings 30 are uniformly dispersed on the surface layer 10 of the vegetation sheet.

After preparing the needed number of frames in which the vegetation sheet 1-1 with the Sunagoke grown seedlings 30 sown, the frames are laid in an open-air field. For this operation, an antiscattering net with a mesh size of 5 mm ― 10 mm may be used for covering all over the frames and may be staked in order to prevent the frames from being blown away, the vegetation sheets 1 from being blown away, the Sunagoke grown seedlings 30 from being blown away and from being unbalanced. In addition, in an initial stage of cultivation of 1-3 months, covering of a light-blocking rate of 30-50% may be conducted in order to promote vigorous rooting of rhizoids 30a of the Sunagoke grown seedlings 30 to the surface layer 10. With regard to irrigation management in the field, it is preferable to just leave it to rainwater in principle in order to prevent putridness due to over humidification and scorch by water at high temperature, but irrigation may be conducted under the circumstances with appropriate temperature management.

In the process of growth of the Sunagoke grown seedlings 30, as shown in Fig. 1, the rhizoids 30a grow through spaces of the netlike structure composing the core layer 20 under the surface layer 10 with being entwined with the fibers S of the netlike structure.

As described in the above, in the vegetation sheet 1-1 according to this embodiment, the fibers S forming the main body 2 made of non-woven fabric and the rhizoids 30a of the Sunagoke grown seedlings 30 laid in the surface layer 10 are immediately entwined with each other in the surface layer 10 and, after that, the rhizoids 30a enter into the core layer 20 and are strongly entwined with the netlike structure of the core layer 20 by means of the branch portions 30c, extending obliquely upward, of the rhizoids 30a. Accordingly, the binding force of the Sunagoke grown seedlings 30 in the vegetation sheet 1 is dramatically increased to improve unity between the main body 2 and the Sunagoke grown seedlings 30 as compared to the vegetation sheet described in Patent document 1 which has no core layer 20. By using this vegetation sheet 1, it is possible to cultivate Sunagoke grown seedlings 30 in a stable state without slippage of the Sunagoke grown seedlings 30 from the main body 2 even in a severe environment such as on a steep slope or in a strong wind or rain.

Since the surface layer 10 has a raised structure, even in an initial stage of cultivation prior to generation of rhizoids 30a of the Sunagoke grown seedlings 30, the gametophores 30b are caught by the raised fibers S so as to prevent the Sunagoke grown seedlings 30 from turning/moving, thus causing no delay in growth of rhizoids. Therefore, it is possible to grow Sunagoke grown seedlings 30 into a predetermined size (gametophores 30b of about 2 cm), for example, in just one year to one-and-a-half years even by a normal field cultivation without special equipment. As just described, by using the vegetation sheet 1 of the present invention, the period (normally about 2-3 years) traditionally required for vegetation of Sunagoke moss can be shortened and the steady supply can also be achieved. As a result of this, the need of extracting natural Sunagoke moss is reduced, thereby solving the problem of dwindling natural resources. In addition, since the cultivation needs no soil, the problem about attachment of soil standing in the way of exportation of Sunagoke moss can be solved.

As mentioned above, by using the vegetation sheet 1-1 according to this embodiment of the present invention, it is possible to solve various problems experienced by the conventional greening business using Sunagoke moss all at once, thus facilitating widespread dissemination of Sunagoke moss.

The Sunagoke vegetation sheet 1-1 according to the embodiment of the present invention meets a requirement for healthy growth and fixation of Sunagoke moss by itself. Therefore, the Sunagoke grown seedlings 30 cultivated by using the vegetation sheet 1-1 requires no expert knowledge for maintenance and no curing period after offered to ordinary people. For example, the irrigation management can be conducted by an ordinary person, and there is no need to manage the outflow of soil or separation of the Sunagoke grown seedlings 30 from the main body 2. As for the vegetation sheet 1-1 of this embodiment, since the Sunagoke grown seedlings 30 are vigorously rooted to the main body 2 and are strongly fixed to the main body 2 and the main body 2 is made of a non-woven fabric (constructed as needle-punched carpet) and thus easily cut, it is possible to provide Sunagoke moss to ordinary people as an exterior good for a miniature garden of, for example, about 3.3 m² and it is possible to facilitate the processing of the vegetation sheet 1-1 into a desired shape or size by ordinary people.

As shown in Fig. 3, a vegetation sheet 1-2 of a second embodiment of the present invention may further comprises a retaining member 40 laid in contact with a lower surface 21 (a lower end of the main body 2) of the core layer 20. Though the retaining member 40 is made of a non-woven fine fabric in this embodiment, it may be made of a plate member of various materials, for example, resin, metal, paper, wood, and the like. The retaining member 40 does not have spaces into which rhizoids 30a of the Sunagoke grown seedlings 30 enter.

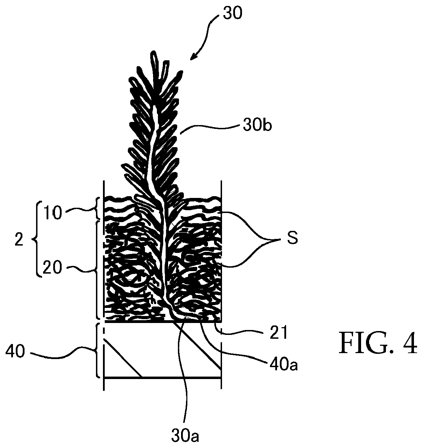

According to this embodiment, as shown in Fig. 4, rhizoids 30a of the Sunagoke grown seedlings 30 extend and project from the lower surface 21 of the core layer 20 do not enter into the retaining member 40 and are held between the lower surface 21 of the core layer 20 and an upper surface 40a of the retaining member 40. As just described, according to the second embodiment, the Sunagoke grown seedlings 30 are fixed not only by the inside of the surface layer 10 and the core layer 20 but also by the lower surface 21 (the lower end of the main body 2) of the core layer 20, thereby ensuring stronger binding with the main body 2 than that of the first embodiment.

It should be noted that, as even for the vegetation sheet 1-1 without the retaining member 40 when used in a state laid in a garden, the ground surface of the garden functions equivalent to the retaining member 40. When the vegetation sheet 1-1 without the retaining member 40 is used in a state attached to a wall, the wall functions equivalent to the retaining member 40. Further when the vegetation sheet 1-1 without the retaining member 40 is used in a state put in a frame, the frame functions equivalent to the retaining member 40.

In order to make stronger binding between the main body 2 and the Sunagoke grown seedlings 30, the retaining member 40 may be made of an adhesive sheet.

Further, the aforementioned retaining member 40 may be made of a wet material capable of absorbing a certain amount of water and storing the water therein, such as a water absorptive polymer and the like, besides the aforementioned non-woven fine fabric with fibers entwined in high density. In this case, it is possible to supply water to the Sunagoke grown seedlings 30 for a prolonged period (or possible to reduce the number of time you have to water), that is, suitable growth environment and easy maintenance of the Sunagoke grown seedlings 30 are achieved. Even in a very dry environment with a wetting problem, it is possible to cultivate Sunagoke grown seedlings 30 in a stable state. Furthermore, it is possible to easily control the wetting condition in accordance with the growth state of Sunagoke moss.

The aforementioned retaining member 40 may have a structure detachable relative to the core layer 20. As an example of the structure coupling these, a pair of engaging elements such as of a hook and loop fastener are attached to the two confronting faces (that is, the lower surface 21 of the core layer 20 and the upper surface 40a of the retaining member 40) so that these are detachably coupled. In the case that the retaining member 40 is detachable, the Sunagoke grown seedlings can be shipped out after removing the retaining member 40 from the core layer 20 easily.

Though embodiments of the present invention have been described, the present invention is not limited to the aforementioned embodiments. Various modifications may be made within the technical scope described in the claims, the specification, and the drawings. Any configurations exhibiting the functions and effects of the present invention may be within the technical scope of the present invention, even if these are not directly described in the specification and/or the drawings. For example, though the surface layer composed of raised fibers is formed on the upper side of the core layer made of non-woven fabric in the aforementioned embodiments, another layer composed of raised fibers may be formed on the lower side of the core layer. With this structure, tip ends of rhizoids projecting from the lower surface of the core layer are also entwined with the raised fibers, thus increasing the binding force of the Sunagoke grown seedlings relative to the vegetation sheet. It is possible to combine the described contents for the embodiments shown above and shown in the respective drawings, unless there is a particular contradiction in an object, configuration, or the like. The described contents for the respective drawings can each be an independent embodiment, and the embodiment of the present invention is not limited to one embodiment in which the described contents and the respective drawings are combined.

### EXPLANATION OF REFERENCES

- 1-1, 1-2, 1-3:: vegetation sheet
- 2:: main body
- 10:: surface layer
- 20:: core layer
- 21:: lower surface
- S:: fiber
- 30:: Sunagoke grown seedling
- 30a:: rhizoid
- 30b:: gametophore
- 40:: retaining member

## Claims

1. A vegetation sheet comprising: a surface layer in which Sunagoke grown seedlings are laid; and a core layer which allows rhizoids of the Sunagoke grown seedlings extending with growth to enter therein wherein
the core layer has a netlike structure having spaces of an aperture size equal to or larger than the thickness of each rhizoid to allow the rhizoids to enter therein.

2. A vegetation sheet as claimed in claim 1, wherein
the amount of Sunagoke grown seedlings laid in the surface layer is of 150 through 180 g/m².

3. A vegetation sheet as claimed in claim 1 or 2, wherein
the spaces of the core layer communicate between the upper and lower surfaces so that the rhizoids entering the spaces project from the lower surface of the core layer.

4. A vegetation sheet as claimed in claim 3, further comprising:
a retaining member disposed beneath the core layer, wherein
ends of the rhizoids projecting from the lower surface of the core layer are held between the core layer and the retaining member.

5. A vegetation sheet as claimed in any of claims 1 through 4, wherein the surface layer is composed of portions raised from the surface of fibers composing the core layer.

6. A vegetation sheet as claimed in any of claims 1 through 5, wherein the core layer is formed by non-woven fabric made of polyester or polypropylene fibers.
